# EUROPEAN PATENT APPLICATION

(11) **EP 4 757 407 A1**
(43) Date of publication of application: **10.06.2026**
(21) Application number: 24789706.9
(22) Date of filing: 21.08.2024
(51) Int. Cl.: H04W 28/10

(54) **PACKET FORWARDING METHOD AND APPARATUS, AND NETWORK DEVICE AND STORAGE MEDIUM**

(71) Applicant: New H3C Technologies Co., Ltd., Hangzhou, Zhejiang 310052 (CN)
(72) Inventor: LUO, Guixing, Beijing 100102 (CN); WANG, Geng, Beijing 100102 (CN); CHENG, Yongchun, Beijing 100102 (CN); LI, Pei, Beijing 100102 (CN)
(74) Representative: Zimmermann & Partner Patentanwälte mbB
(86) International application number: PCT/CN2024/113659
(87) International publication number: WO 2026/040017

(57) **Abstract**

Disclosed in the present disclosure are a packet forwarding method, equipment, a network apparatus, and a storage medium applied in the network apparatus in an access network. The method comprises: acquiring a first packet from a first terminal, wherein the first terminal is a wired terminal or a wireless terminal; determining a target network slice matching both the first packet and the first terminal; performing QoS forwarding of the first packet based on a forwarding policy corresponding to the target network slice. The present disclosure may solve the problem of independent forwarding policies in wired and wireless networks, simplify management of the forwarding policies, and enhance traffic control effects.

## Description

### TECHNICAL FIELD

The present disclosure relates to the field of communication technology, particularly to a packet forwarding method, equipment, a network apparatus, and a storage medium.

### BACKGROUND

With the advancements in Wireless Local Area Network (WLAN) technology and the proliferation of network applications, the traffic models of WLAN have become increasingly complex. However, network resources are inherently limited, making it increasingly urgent to implement Quality of Service (QoS) forwarding of packets, provide differentiated services on the network, and ensure rational planning and utilization of network resources.

Currently, several packet forwarding methods have been proposed that employ forwarding policies to offer a certain level of differentiated services on network. Nevertheless, the forwarding policies for wired and wireless networks are often designed independently, leading to difficulties in managing these policies and suboptimal traffic control outcomes.

### SUMMARY

Some examples of the present disclosure are to provide a packet forwarding method, equipment, a network apparatus, and a storage medium, in order to solve the problem of independent forwarding policies in wired and wireless networks, reduce the difficulty of managing the forwarding policies, and improve traffic control effect. The solutions are as follows:
In some examples of the present disclosure, a packet forwarding method applied to a network apparatus in an access network is provided, the method comprising:
acquiring a first packet from a first terminal, wherein the first terminal is a wired terminal or a wireless terminal;
determining a target network slice matching both the first packet and the first terminal;
performing QoS forwarding of the first packet based on a forwarding policy corresponding to the target network slice.

In some examples, the network apparatus is a source apparatus, an intermediate apparatus, or a destination apparatus along the forwarding path of the first packet; and
determining the target network slice matching both the first packet and the first terminal comprises:
determining a network slice corresponding to packet information of the first packet and terminal information of the first terminal based on pre-stored correspondence relationships among packet information, terminal information, and network slices, and designating the network slice as the target network slice matching both the first packet and the first terminal.

In some examples, the network apparatus is a source apparatus, an intermediate apparatus, or a destination apparatus along the forwarding path of the first packet; and
determining the target network slice matching both the first packet and the first terminal comprises:
acquiring a first characteristic value filled in a specified field of the first packet;
determining a network slice associated with the first characteristic value based on correspondence relationships between characteristic values and network slices associated with the forwarding policy, to acquire the target network slice matching both the first packet and the first terminal.

In some examples, the network apparatus is a source apparatus or an intermediate apparatus along the forwarding path of the first packet; and
performing QoS forwarding of the first packet based on the forwarding policy corresponding to the target network slice, comprises:
acquiring a second characteristic value associated with the target network slice based on the correspondence relationships between the characteristic values and the network slices associated with the forwarding policy;
modifying the characteristic value originally filled in the specified field of the first packet to the second characteristic value to acquire a second packet;
performing QoS forwarding of the second packet based on the forwarding policy corresponding to the target network slice.

In some examples, the network apparatus is an intermediate apparatus along the forwarding path of the first packet; and the method further comprises:
detecting sameness between the second characteristic value and a characteristic value filled in the specified field of the first packet;
in response to a determination that the second characteristic value is not the same as the characteristic value filled in the specified field of the first packet, modifying the characteristic value filled in the specified field of the first packet to the second characteristic value to acquire the second packet;
in response to a determination that the second characteristic value is the same as the characteristic value filled in the specified field of the first packet, designating the first packet as the second packet, and performing QoS forwarding of the second packet based on the forwarding policy corresponding to the target network slice.

In some examples, the characteristic values comprise Virtual Local Area Network (VLAN) identifiers and/or Differentiated Services Code Points (DSCPs).

In some examples, the network apparatus is a source apparatus along the forwarding path of the first packet, and the first terminal is a wireless terminal; prior to acquiring the first packet from the first terminal, the method further comprises:
determining a target network slice matching the first terminal with the first terminal being associated with the network apparatus;
sending a first Enhanced Distributed Channel Access (EDCA) parameter corresponding to the target network slice associated with the forwarding policy to the first terminal; wherein the first packet is a packet sent by the first terminal based on the first EDCA parameter.

In some examples, the network apparatus is a destination apparatus along the forwarding path of the first packet, and the destination terminal corresponding to the first packet is a wireless terminal; and
performing QoS forwarding of the first packet based on the forwarding policy corresponding to the target network slice comprises:
preempting an air interface based on a second EDCA parameter of the network apparatus associated with the forwarding policy;
once the air interface is preempted, performing QoS forwarding of the first packet based on a priority order of the target network slice among multiple the network slices.

In some examples, the method further comprises:
adjusting a first EDCA parameter of each network slice and/or a second EDCA parameter of the network apparatus based on a current ratio of uplink packets and downlink packets received by the network apparatus.

In some examples, adjusting the first EDCA parameter of each network slice and/or the second EDCA parameter of the network apparatus based on the current ratio of uplink packets and downlink packets received by the network apparatus comprises:
determining the current ratio of uplink packets and downlink packets received by the network apparatus; determining a target parameter ratio corresponding to the current ratio based on correspondence relationships between ratios of uplink packets and downlink packets and parameter ratios indicated by a preset adjustment policy, wherein a parameter ratio is a ratio of the first EDCA parameter to the second EDCA parameter; adjusting the first EDCA parameter of each network slice and/or the second EDCA parameter of the network apparatus based on the target parameter ratio; or,
reporting uplink packet statistics and downlink packet statistics received by the network apparatus to a policy controller; receiving and storing the first EDCA parameter of each network slice and/or the second EDCA parameter of the network apparatus issued by the policy controller.

In some examples, the method further comprises:
receiving the forwarding policy issued by a policy controller;
storing the forwarding policy in the network apparatus.

In some examples of the present disclosure, a packet forwarding equipment applied to a network apparatus in an access network is provided, wherein the equipment comprises:
an acquisition module, to acquire a first packet from a first terminal, wherein the first terminal is a wired terminal or a wireless terminal;
a first determination module, to determine a target network slice matching both the first packet and the first terminal;
a forwarding module, to perform QoS forwarding of the first packet based on a forwarding policy corresponding to the target network slice.

In some examples, the network apparatus is a source apparatus, an intermediate apparatus, or a destination apparatus along a forwarding path of the first packet; and
the first determination module is to determine a network slice corresponding to packet information of the first packet and terminal information of the first terminal based on pre-stored correspondence relationships among packet information, terminal information, and network slices, and designating the network slice as the target network slice matching both the first packet and the first terminal.

In some examples, the network apparatus is a source apparatus, or an intermediate apparatus, or a destination apparatus along a forwarding path of the first packet; and
the first determination module is to acquire a first characteristic value filled in a specified field of the first packet; determine a network slice associated with the first characteristic value based on correspondence relationships between characteristic values and network slices associated with a forwarding policy, to acquire the target network slice matching both the first packet and the first terminal.

In some examples, the network apparatus is a source apparatus or an intermediate apparatus along the forwarding path of the first packet; and
the forwarding module is to:
acquire a second characteristic value associated with the target network slice based on the correspondence relationships between the characteristic values and the network slices associated with the forwarding policy;
modify a characteristic value filled in the specified field of the first packet to the second characteristic value to acquire a second packet;
perform QoS forwarding of the second packet based on the forwarding policy corresponding to the target network slice.

In some examples, the network apparatus is an intermediate apparatus along the forwarding path of the first packet; and the forwarding module is to:
detect sameness between the second characteristic value and a characteristic value filled in the specified field of the first packet;
in response to a determination that the second characteristic value is not the same as the characteristic value filled in the specified field of the first packet, modify the characteristic value filled in the specified field of the first packet to the second characteristic value to acquire the second packet, and performing QoS forwarding of the second packet based on the forwarding policy corresponding to the target network slice;
in response to a determination that the second characteristic value is the same as the characteristic value filled in the specified field of the first packet, designate the first packet as the second packet, and perform QoS forwarding of the second packet based on the forwarding policy corresponding to the target network slice.

In some examples, the characteristic value comprises Virtual Local Area Network Identifiers (VLAN IDs) and/or Differentiated Services Code Points (DSCPs).

In some examples, the network apparatus is a source apparatus along a forwarding path of the first packet, and the first terminal is a wireless terminal; and the equipment further comprises:
a second determination module, to determine a target network slice matching the first terminal with the first terminal being associated with the network apparatus prior to acquiring the first packet from the first terminal;
a sending module, to send a first EDCA parameter corresponding to the target network slice associated with the forwarding policy to the first terminal; wherein the first packet is a packet sent by the first terminal based on the first EDCA parameter.

In some examples, the network apparatus is a destination apparatus along a forwarding path of the first packet, and a destination terminal corresponding to the first packet is a wireless terminal;
the forwarding module is to preempt an air interface based on a second EDCA parameter of the network apparatus associated with the forwarding policy; and perform QoS forwarding of the first packet based on a priority order of the target network slice among multiple network slices in a case where the air interface is preempted.

In some examples, the equipment further comprises:
an adjustment module, to adjust a first EDCA parameter of each network slice and/or a second EDCA parameter of the network apparatus based on a current ratio of uplink packets and downlink packets received by itself.

In some examples, the adjustment module is to:
determine the current ratio of uplink packets and downlink packets received by itself; determine a target parameter ratio corresponding to the current ratio based on correspondence relationships between ratios of uplink packets and downlink packets and parameter ratios indicated by a preset adjustment policy, wherein a parameter ratio is a ratio of the first EDCA parameter to the second EDCA parameter; adjust the first EDCA parameter of each network slice and/or the second EDCA parameter of the network apparatus based on the target parameter ratio; or,
report uplink packet statistics and downlink packet statistics received by the network apparatus to a policy controller; and receive and store the first EDCA parameter of each network slice and/or the second EDCA parameter of the network apparatus issued by the policy controller.

In some examples, the equipment further comprises:
a receiving module, to receiving the forwarding policy issued by a policy controller;
a storage module, to storing the forwarding policy in the network apparatus.

In some examples of the present disclosure, a network apparatus is provided, comprising:
a memory, to store a computer program;
a processor, to execute the computer program stored on the memory to perform any one of the above-mentioned methods.

In some examples of the present disclosure, a computer-readable storage medium storing a computer program is provided. In response to being executed by a processor, the computer program performs any of the above-mentioned packet forwarding methods.

In some examples of the present disclosure, a computer program product containing instructions is provided, which in response to running on a computer, causes the computer to execute any of the above-mentioned packet forwarding methods.

In the technical solutions provided by the examples of the present disclosure, the network device in the access network determines the target network slice based on the first packet and the first terminal sending the first packet, which is also known as network differentiated services. According to the forwarding policy corresponding to the target network slice, the network device performs QoS forwarding on the first packet to achieve traffic control. In this packet forwarding method, network devices in both wired and wireless networks can identify packets and terminals. Therefore, the forwarding policy corresponding to the network slice in the technical solutions provided by the examples of the present disclosure may be applied to both wired and wireless networks, ensuring that the same packet and the same terminal in different network apparatuses belong to the same network slice, and then the forwarding policy corresponding to the same network slice is adopted to perform QoS forwarding of the packet, thereby solving the problem of independent forwarding policies in wired and wireless networks. Besides, it reduces the management difficulty of forwarding policies and improves the effect of traffic control.

Of course, implementing any product or method of the present disclosure does not necessarily require achieving all the above-mentioned advantages simultaneously.

### BRIEF DESCRIPTION OF THE DRAWINGS

The schematic diagrams described here are provided to further understand the present disclosure and constitute a part of the present disclosure. The illustrative examples of the present disclosure and the description thereof are used to explain the present disclosure and do not constitute an improper limitation on the present disclosure.
FIG. 1 is a schematic diagram of an access network architecture;
FIG.2a is a first schematic diagram of a structure of a packet forwarding system provided in an example of the present disclosure;
FIG.2b is a second schematic diagram of a structure of a packet forwarding system provided in an example of the present disclosure;
FIG.3 is a first schematic diagram of a process of a packet forwarding method provided in an example of the present disclosure;
FIG.4 is a schematic diagram of a network topology provided in an example of the present disclosure;
FIG.5 is a second schematic diagram of a process of a packet forwarding method provided in an example of the present disclosure;
FIG.6 is a third schematic diagram of a process of a packet forwarding method provided in an example of the present disclosure;
FIG.7 is a fourth schematic diagram of a process of a packet forwarding method provided in an example of the present disclosure;
FIG.8 is a fifth schematic diagram of a process of a packet forwarding method provided in an example of the present disclosure;
FIG.9 is a schematic diagram of an access network architecture provided in an example of the present disclosure;
FIG.10 is a sixth schematic diagram of a process of a packet forwarding method provided in an example of the present disclosure;
FIG.11 is a seventh schematic diagram of a process of a packet forwarding method provided in an example of the present disclosure;
FIG.12 is an eighth schematic diagram of a process of a packet forwarding method provided in an example of the present disclosure;
FIG.13 is a schematic diagram of a structure of a packet forwarding equipment provided in an example of the present disclosure;
FIG.14 is a schematic diagram of a structure of a network apparatus provided in an example of the present disclosure.

### DETAILED DESCRIPTION

To clarify the purpose, technical scheme, and advantages of the present disclosure more comprehensively, the following detailed description is provided with reference to the accompanying drawings and examples. It is evident that the described examples are merely a part of the present disclosure, rather than exhaustive. All other examples derived by those of ordinary skill in the art based on the examples in the present disclosure fall within the scope of protection of the present disclosure.

With the advancements in WLAN network technology and the proliferation of network applications, networks are undergoing changes, primarily manifested in the following two aspects:
In one aspect, the traffic models of WLAN have become more complex, which is manifested as that: 1) the traffic volume has increased, with rapid growth in traffic of individual terminal and in total traffic of network; 2) the direction of data flow has changed, from initially being dominated by downlink traffic to making the ratio of uplink and downlink traffic be determined by some business. This complexity in the network traffic models has led to an increased demand for network differentiated services.

In another aspect, network resources are inherently limited. Take the economics of network construction into consideration, allocated network resources generally meet daily demands, but traffic spikes often occur, resulting in demanded network resources exceeding the allocated network resources. Moreover, even disregarding costs, while wired networks may address traffic spikes by adding lines, wireless networks face inherent constraints as their transmission medium (the air interface) is fixed, meaning that wireless terminals within a broadcast space share a limited communication channel. In summary, network resources are limited, leading to resource competition issues.

The conflict between the complexity of the network traffic model and the relative scarcity of network resources underscores the urgency of implementing QoS (Quality of Service) forwarding for packets, providing network differentiated services, and ensuring rational planning and utilization of network resources.

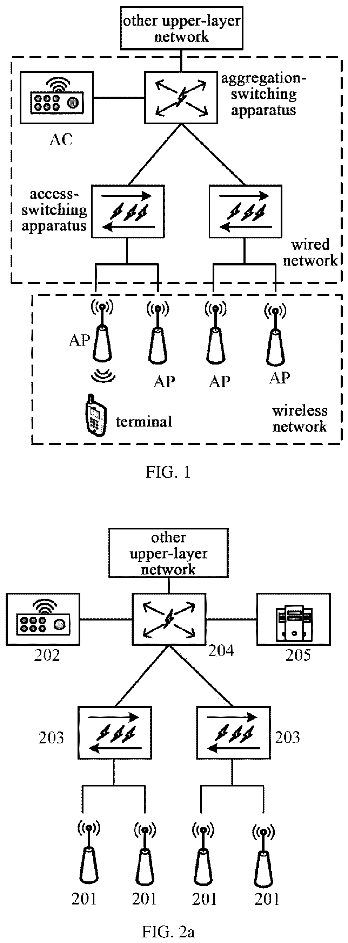

Currently, the access network architecture comprises both wired and wireless networks, as illustrated in FIG.1. This access network architecture comprises Access Points (APs), access-switching apparatuses, an aggregation-switching apparatus, and Accessing Controllers (ACs). A wireless connection exists between an AP and a wireless terminal, i.e., the network between an AP and a wireless terminal is a wireless network, while a wired connection exists among an AP, an access-switching apparatus, an aggregation-switching apparatus, and an AC, i.e., the network among an AP, an access-switching apparatus, an aggregation-switching apparatus, and an AC is a wireless network. The forwarding policies in wired and wireless networks are independent from each other, that is, the network apparatuses in the wired networks such as the APs, the access-switching apparatuses, the aggregation-switching apparatus, and ACs, may apply different forwarding policies for packet forwarding from the network apparatuses in the wireless networks such as the APs. The aggregation-switching apparatus is to connect to other upper-layer networks.

Given the growing demand for network differentiated services, the aforementioned packet forwarding methods present challenges in managing the forwarding policies and fail to achieve the desired traffic control effects. For instance, the forwarding policy in a wireless network indicates a traffic rate of 5Gbps for Packet 1, while the forwarding policy in a wired network indicates a traffic rate of 10Gbps for Packet 1. Due to the inconsistency in traffic control between wired and wireless networks, the actual traffic rate for Packet 1 across the entire access network may only be 5Gbps, falling short of the expected 10Gbps.

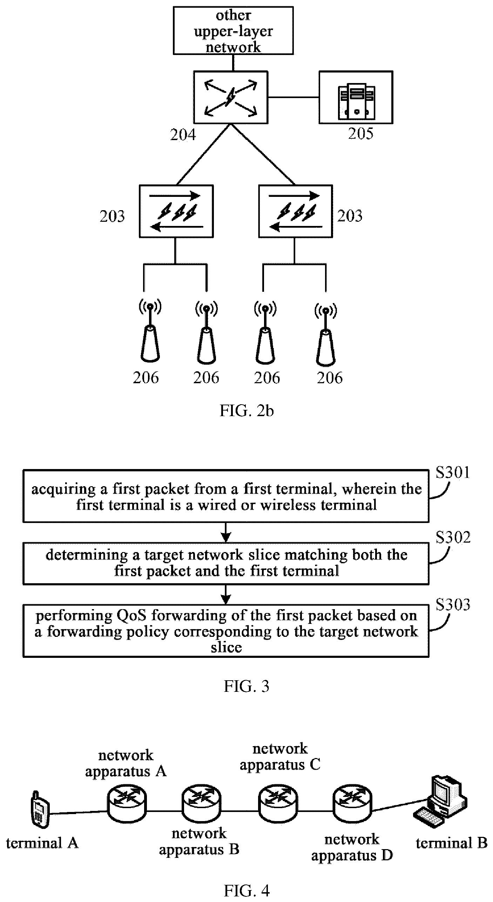

To address the issue of independent forwarding policies in wired and wireless networks, reduce the complexity of managing the forwarding policies, and enhance traffic control effects, an example of the present disclosure proposes a packet forwarding system. In an AC+FIT (Fit) Access Point (AP) network architecture, as shown in FIG.2a, the packet forwarding system may comprise APs 201, an Access Controller (AC) 202, access-switching apparatuses 203, an aggregation-switching apparatus 204, and a policy controller 205. In a FAT (Fat) AP network architecture, as shown in FIG.2b, the packet forwarding system may comprise APs 206, access-switching apparatuses 203, an aggregation-switching apparatus 204, and a policy controller 205. Here, AP 201 represents a FIT AP, while AP 206 represents a FAT AP.

In the present disclosure, the policy controller 205 serves as a controller entity as a role between the Software Defined Network (SDN) controller and the network management server, such as a server, personal computer, etc. The policy controller 205 is responsible for managing the forwarding policies and distributing these policies to AC 202, AP 206, the access-switching apparatus 203, and the aggregation-switching apparatus 204.

The forwarding policies are strategies used to control traffic based on network slicing, comprising regulating packet transmission rates, transmission ports, reception rates, reception ports, etc. The basis for network slicing in the forwarding policies encompasses both wired and wireless elements. Wired elements may comprise but are not limited to physical ports, traffic characteristics such as Differentiated Services Code Point (DSCP), Virtual Local Area Network (VLAN), and Deep Packet Inspection (DPI) application identification information. Wireless elements may comprise but are not limited to Service Set Identifier (SSID), Media Access Control (MAC) address, VLAN, and DPI application identification information, etc. In this example, network slicing may be based on a single element or a combination of multiple elements, without any limitation. In other words, the physical network may be divided into multiple logical networks based on the aforementioned single or multiple elements, and different logical networks may provide different Quality of Service (QoS) services. Network slicing, also known as network partitioning, refers to the logical networks within the physical network, enabling the provision of different QoS services, i.e., differentiated QoS services, to different packets.

The forwarding policies encompass forwarding policies for wired networks and forwarding policies for wireless networks. The forwarding policies for wireless networks are issued to ACs 202 and Aps 206, while those for wired networks are issued to the access-switching apparatus 203 and the aggregation-switching apparatus 204.

The aggregation-switching apparatus 204 receives forwarding policies from the policy controller 205 and controls traffic based on the forwarding policies, such as perform QoS forwarding of packets.

The access-switching apparatus 203 may supply power to APs 201 and APs 206, and it may further receive the forwarding policies from the policy controller 205 and control traffic based on the forwarding policies, comprising QoS forwarding of packets.

In the example of the present disclosure, one or more levels of the access-switching apparatuses 203 and one or more levels of the aggregation-switching apparatuses 204 may be deployed in the packet forwarding system. Figures 2a and 2b illustrate examples with one level of each, which are not intended to be limiting.

AC 202 manages APs 201 and the wireless terminals accessing APs 201. Additionally, AC 202 receives the forwarding policies from the policy controller 205 and distributes them to APs 201.

AP 201 receives the forwarding policies distributed from AC 202 and controls traffic based on the forwarding policies, such as performing QoS forwarding of packets.

AP 206 manages the wireless terminals accessing it. Moreover, AP 206 receives the forwarding policies from the policy controller 205 and controls traffic based on these policies, comprising QoS forwarding of packets.

Based on the aforementioned packet forwarding system, an example of the present disclosure provides a packet forwarding method, as illustrated in FIG.3, applied to a network apparatus in the access network which can be any network apparatus in the access network, such as AP 201, AP 206, the access-switching apparatus 203, and the aggregation-switching apparatus 204. The packet forwarding method comprises the following blocks:
Block S301: acquiring a first packet from a first terminal, wherein the first terminal is a wired or wireless terminal.

Block S302: determining a target network slice matching both the first packet and the first terminal.

Block S303: performing QoS forwarding of the first packet based on a forwarding policy corresponding to the target network slice.

In the technical solution provided by the present disclosure example, a network apparatus in the access network determines the target network slice based on the first packet and the first terminal that sent the first packet. By applying the forwarding policy corresponding to this target network slice, the network apparatus performs QoS forwarding of the first packet, thereby achieving traffic control. This packet forwarding method enables both wired and wireless network apparatuses to identify packets and terminals, ensuring that the forwarding policy corresponding to network slice may be applied to both wired and wireless networks. Consequently, the same packet and terminal are assigned to the same network slice across different network apparatuses, and the same forwarding policy is adopted for QoS forwarding of a packet. This addresses the issue of the independent forwarding policies between wired and wireless networks, and at the same time simplifies the management of the forwarding policies, and enhances traffic control effects.

In the block S301 mentioned above, the first terminal may be any terminal accessing the network. In response to a determination that the first terminal accesses the network wirelessly, for instance, in response to a determination that the first terminal is wirelessly connected to AP 201 or AP 206, the first terminal is a wireless terminal. In response to a determination that the first terminal accesses the network through a wired connection, for instance, in response to a determination that the first terminal is wired to the access switching apparatus 203, the first terminal is a wired terminal.

The first terminal sends a first packet. In response to a determination that the first packet is transmitted in the access network, the first packet may need to traverse multiple network apparatuses prior to reaching the destination terminal (e.g., the second terminal). These multiple network apparatuses constitute the network apparatuses traversed by the first packet, i.e., the network apparatuses along the forwarding path of the first packet, which may be categorized into the source apparatuses, the intermediate apparatuses, and the destination apparatuses. Among them, the source apparatus is the first network apparatus along the forwarding path of the first packet, the destination apparatus is the last network apparatus along the forwarding path of the first packet, and the intermediate apparatus(es) is/are other network apparatus(es) along the forwarding path of the first packet than the source apparatus and the destination apparatus.

Take the network topology shown in FIG.4 as an example, Terminal A (the first terminal) sends Packet 1 to Terminal B (the second terminal). The Packet 1 traverses network apparatuses A to D in the access network, meaning that the forwarding path of the Packet 1 is: network apparatus A, network apparatus B, network apparatus C, network apparatus D. The network apparatus A is the source apparatus along the forwarding path of the Packet 1, the network apparatuses B and C are intermediate apparatuses, and the network apparatus D is the destination apparatus.

Each network apparatus along the forwarding path of the first packet sequentially acquires the first packet from the first terminal.

In the block S302 mentioned above, the network apparatus stores the correspondence relationships among packets, terminals, and network slices. After acquiring the first packet, a network apparatus may identify the relevant information about the first packet and the first terminal, and then determine the target network slice matching both the first packet and the first terminal based on the correspondence relationships. This relevant information may be used to distinguish the first packet and the first terminal, ensuring an accurate network slice determination.

In the block S303 mentioned above, the network apparatuses store the correspondence relationships between the network slices and the forwarding policies, such as the forwarding policies issued by the policy controller mentioned earlier. After determining the target network slice, a network apparatus may acquire the forwarding policy corresponding to the target network slice and then perform QoS forwarding of the first packet based on this policy.

In some examples of the present disclosure, the forwarding policies in various network apparatuses may be uniformly issued by the policy controller, ensuring that the same network slice corresponds to the same forwarding policy across different network apparatuses, thereby achieving the desired traffic control effect.

For instance, the forwarding policy in the wireless network indicates a traffic rate of 10Mbps for Packet 1, while the forwarding policy in the wired network also indicates a traffic rate of 10Mbps for Packet 1. Due to the unified traffic control in both wired and wireless networks, the traffic rate for Packet 1 remains 10Mbps throughout the access network, achieving the expected traffic control effect of 10Mbps.

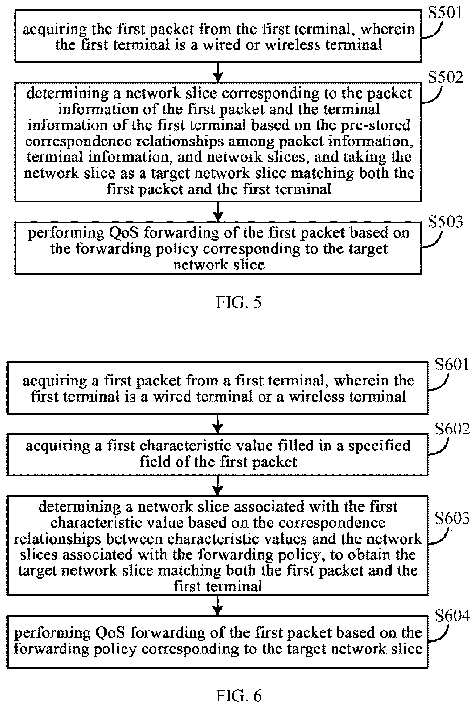

In some examples, to accurately determine the network slices and perform packet forwarding, i.e., traffic control, an example of the present disclosure further provides a packet forwarding method, as shown in FIG.5, which may comprise the following blocks:
Block S501: acquiring the first packet from the first terminal, wherein the first terminal is a wired or wireless terminal;
Block S502: determining a network slice corresponding to the packet information of the first packet and the terminal information of the first terminal based on the pre-stored correspondence relationships among packet information, terminal information, and network slices, and designating the network slice as a target network slice matching both the first packet and the first terminal;
Block S503: performing QoS forwarding of the first packet based on the forwarding policy corresponding to the target network slice.

In this method, the network apparatus may be a source apparatus, an intermediate apparatus, or a destination apparatus on the forwarding path of the first packet.

Blocks S501 and S503 mentioned above are identical to blocks S301 and S303, respectively, and will not be elaborated here.

In the block S502 mentioned above, the relevant information of packets and terminals is represented by packet information and terminal information. For example, packet information may comprise but is not limited to five-tuple, traffic characteristics, VLAN identifiers (IDs), etc., while terminal information may comprise but is not limited to terminal types, terminal locations, and terminal names. Terminal types may be audio acquisition devices, image acquisition devices, voice acquisition devices, etc.

The network apparatus may identify the first packet to acquire the packet information of the first packet and the terminal information of the first terminal. The correspondence relationships among packet information, terminal information, and the network slices are pre-stored in the network apparatus, which may be issued by the policy controller mentioned above. The network apparatus searches for the correspondence relationship that comprises the packet information of the first packet and the terminal information of the first terminal in the pre-stored correspondence relationships, then takes the network slice comprised in the searched correspondence relationship as the target network slice, i.e., the network slice belonging to the first terminal.

After determining the target network slice, the network apparatus may perform QoS forwarding of the first packet based on the corresponding forwarding policy.

In some examples of the present disclosure, although some fields in packets may be subject to errors during transmission, the overall probability of errors in packet information and terminal information is very low. Using packet information and terminal information to determine the network slices significantly reduces the error rate in the network slice determination and improves the accuracy of traffic control.

Moreover, since all network apparatuses in the access network determine network slices in the same manner, the maintenance and management of network apparatuses in the access network is facilitated.

In some examples, to improve the efficiency of network slice determination, some examples of the present disclosure further provide a packet forwarding method, as shown in FIG.6, which may comprise the following blocks:
Block S601: acquiring a first packet from a first terminal, wherein the first terminal is a wired terminal or a wireless terminal.

Block S602: acquiring a first characteristic value filled in a specified field of the first packet.

Block S603: determining a network slice associated with the first characteristic value based on the correspondence relationships between characteristic values and the network slices associated with the forwarding policy, to acquire the target network slice matching both the first packet and the first terminal.

Block S604: performing QoS forwarding of the first packet based on the forwarding policy corresponding to the target network slice.

In this method, the network apparatus is a source apparatus, an intermediate apparatus, or a destination apparatus on the forwarding path of the first packet.

The blocks S601 and S604 above are the same as blocks S301 and S303, respectively, and will not be repeated here.

In some examples of the present disclosure, a forwarding policy is associated with a correspondence relationship between a characteristic value and a network slice.

In block S602 above, the specified field is used to be filled with the characteristic value associated with the network slice. This specified field is an original field in the packet. In some examples of the present disclosure, the characteristic value filled in this specified field is associated with a network slice. For example, the specified field may be a DSCP field and/or a VLAN ID field, etc. Correspondingly, the characteristic value is a DSCP and/or a VLAN ID. The forwarding policy may indicate the correspondence relationship between the characteristic value filled in the specified field and the network slice. The network apparatus analyzes the forwarding policy to acquire the correspondence relationship between the characteristic value and the network slice and then stores this correspondence relationship.

In some examples of the present disclosure, in response to a determination that the first terminal supports filling the specified field, i.e., the specified field in the first packet sent by the first terminal carries the characteristic value associated with the network slice, the network apparatus is a source apparatus, an intermediate apparatus, or a destination apparatus on the forwarding path of the first packet. That is, each network apparatus on the forwarding path of the first packet may execute blocks S602 to S603, extract the characteristic value, i.e., the first characteristic value, from the specified field in the first packet; search for the correspondence relationship comprising the first characteristic value in the correspondence relationships between the characteristic values filled in the specified field and the network slices associated with the forwarding policy; and designate the network slice comprised in the searched correspondence relationship as the target network slice.

In response to a determination that the first terminal does not support filling the specified field, i.e., the specified field in the first packet sent by the first terminal does not carry the characteristic value associated with the network slice, the network apparatus is an intermediate apparatus or a destination apparatus on the forwarding path of the first packet. That is, each intermediate apparatus or destination apparatus on the forwarding path of the first packet executes blocks S602 to S603, extracts the characteristic value, i.e., the first characteristic value, from the specified field in the first packet; searches for the correspondence relationship comprising the first characteristic value in the correspondence relationships between the characteristic values and the network slices associated with the forwarding policy; and takes the network slice comprised in the searched correspondence relationship as the target network slice.

For the source apparatus on the forwarding path of the first packet, it is responsible for filling the first characteristic value associated with the target network slice into the first packet to facilitate a subsequent intermediate apparatus or a destination apparatus to determine the target network slice based on this first characteristic value and then perform corresponding QoS forwarding.

In the technical solutions provided by some examples of the present disclosure, the network apparatus only needs to identify the characteristic value filled in the specified field and determine the target network slice based on it, which reduces the elements referenced for determining the target network slice, lowers the complexity of determining the target network slice, and improves the efficiency of network slice determination.

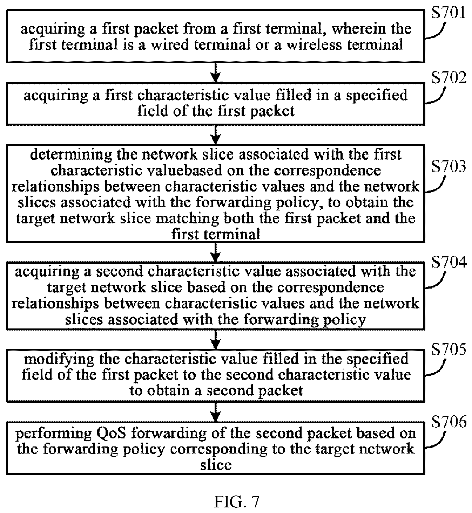

In some examples, to ensure that each network apparatus uses the same forwarding policy for the same packet and ensure the effect of traffic control, for the source apparatus or intermediate apparatus along the forwarding path of the first packet, some examples of the present disclosure further provide a packet forwarding method, as shown in FIG.7, which may comprise the following blocks:

Block S701: acquiring a first packet from a first terminal, wherein the first terminal is a wired terminal or a wireless terminal.

Block S702: acquiring a first characteristic value filled in a specified field of the first packet.

Block S703: determining the network slice associated with the first characteristic value based on the correspondence relationships between characteristic values and the network slices associated with the forwarding policy, to acquire the target network slice matching both the first packet and the first terminal.

Block S704: acquiring a second characteristic value associated with the target network slice based on the correspondence relationships between characteristic values and the network slices associated with the forwarding policy.

Block S705: modifying the characteristic value filled in the specified field of the first packet to the second characteristic value to acquire a second packet.

Block S706: performing QoS forwarding of the second packet based on the forwarding policy corresponding to the target network slice.

Blocks S701 to S703 above are the same as blocks S601 to S603, respectively, and will not be repeated here.

In block S704 above, the correspondence relationships between the network slices and characteristic values associated with the forwarding policy are pre-stored in the network apparatus, wherein the characteristic values in this correspondence relationships are the characteristic values that need to be filled in the specified fields. For example, in response to a determination the specified field is a DSCP field, i.e., the characteristic value filled in the specified field is DSCP, and then the characteristic values in the above correspondence relationships are DSCPs.

After determining the target network slice, the network apparatus may acquire the characteristic value associated with the target network slice, i.e., the second characteristic value, based on the pre-stored correspondence relationships between the network slices and characteristic values. In some examples of the present disclosure, under the condition that the first packet is transmitted accurately, the second characteristic value is the same as the first characteristic value.

After acquiring the second characteristic value, the network apparatus executes blocks S705 to S706, modifies the characteristic value filled in the specified field of the first packet to the second characteristic value, wherein the modified first packet becomes the second packet; performs QoS forwarding of the second packet based on the forwarding policy corresponding to the target network slice. Here, the operation of performing QoS forwarding of the second packet may refer to the relevant description of the block S303, which will not be repeated here.

In the technical solutions provided by some examples of the present disclosure, after receiving the first packet, the network apparatus may process it, and the characteristic value filled in the specified field of the processed first packet may change. In some examples of the present disclosure, in response to a determination that the network apparatus performs QoS forwarding of the first packet, it fills the second characteristic value associated with the target network slice into the first packet prior to forwarding it, ensuring that a subsequent network apparatus still uses the forwarding policy corresponding to the target network slice to perform QoS forwarding of the first packet, thereby ensuring that each network apparatus uses the same forwarding policy for the same packet, and ensuring the effect of traffic control.

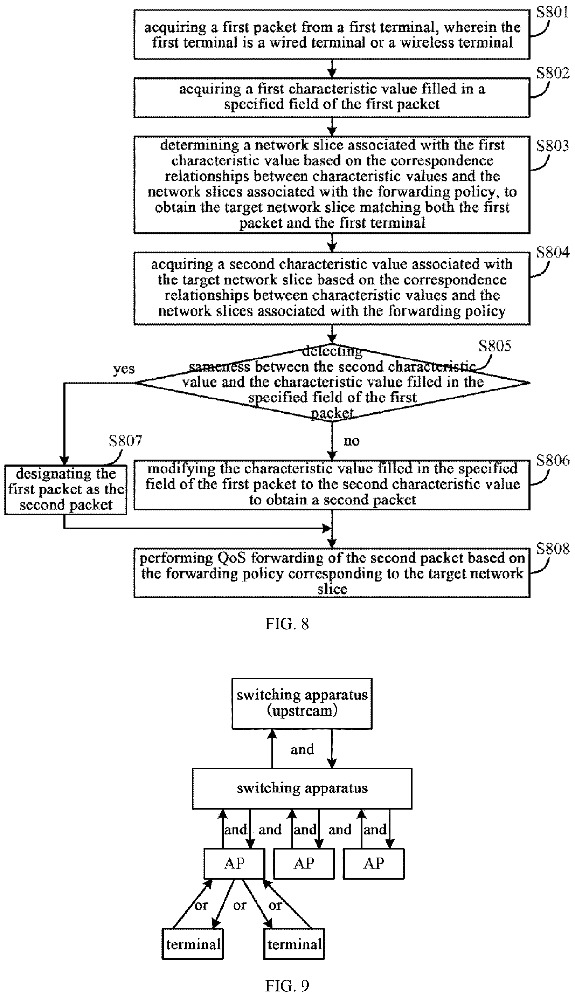

In some examples, to reduce the burden on network apparatuses, in response to a determination that the network apparatus is an intermediate apparatus along the forwarding path of the first packet, some examples of the present disclosure further provide a packet forwarding method, as shown in FIG.8, which may comprise the following blocks:

Block S801: acquiring a first packet from a first terminal, wherein the first terminal is a wired terminal or a wireless terminal.

Block S802: acquiring a first characteristic value filled in a specified field of the first packet.

Block S803: determining a network slice associated with the first characteristic value based on the correspondence relationships between characteristic values and the network slices associated with the forwarding policy, to acquire the target network slice matching both the first packet and the first terminal.

Block S804: acquiring a second characteristic value associated with the target network slice based on the correspondence relationships between characteristic values and the network slices associated with the forwarding policy.

Block S805: detecting sameness between the second characteristic value and the characteristic value filled in the specified field of the first packet; in response to a determination that the second characteristic value is not the same as the characteristic value filled in the specified field of the first packet, executing block S806; in response to a determination that the second characteristic value is the same as the characteristic value filled in the specified field of the first packet, executing block S807.

Block S806: modifying the characteristic value filled in the specified field of the first packet to the second characteristic value to acquire a second packet.

Block S807: designating the first packet as the second packet.

Block S808: performing QoS forwarding of the second packet based on the forwarding policy corresponding to the target network slice.

Blocks S801 to S804, S806, and S808 above are the same as blocks S701 to S706, respectively, and will not be repeated here.

In the example of the present disclosure, after acquiring the second characteristic value, the network apparatus detects that the characteristic value filled in the specified field of the first packet is different from the second characteristic value, which means the characteristic value filled in the specified field of the first packet is not associated with the target network slice. Therefore, the characteristic value filled in the specified field of the first packet is modified. With the characteristic value filled in the specified field of the first packet being the same as the second characteristic value, which indicates that the characteristic value filled in the specified field of the first packet is associated with the target network slice, the network apparatus will not modify the characteristic value filled in the specified field of the first packet, but directly use the first packet as the second packet for QoS forwarding, thereby reducing the burden on the network apparatus.

The packet forwarding method provided in the example of the present disclosure may be applied to access networks that combine wireless and wired networks. This enables the QoS forwarding of the first packet by the network apparatus to involve both the QoS forwarding of the wireless network and the QoS forwarding of the wired network. The following describes the QoS forwarding in wireless and wired networks separately.

### (1) QoS Forwarding in Wired Networks

In wired networks, the links between terminals and network apparatuses, as well as between network apparatuses, are full-duplex wired links. In the access network shown in FIG.9, the wired links between the AP and the switching apparatus, and between the switching apparatus and uplink switching apparatus, are in an "and" relationship, meaning operating simultaneously, with multiple wired links forming a parallel model. Furthermore, for wired links, the negotiated connection rate is the actual rate. Therefore, there may be no need to consider initial port receptions of packets for wired links, and only processing packets after entering the network apparatus may be considered by QoS. Simply put, QoS for wired networks needs to focus only on the final forwarding of packets after queuing.

In the example of the present disclosure, the network apparatus performs network slicing, i.e., traffic splitting. After splitting, QoS forwarding of the first packet may be achieved using methods such as priority mapping, traffic policing and rate limiting, and traffic filtering. Some details may be found in related technologies and will not be repeated here.

### (2) QoS Forwarding in Wireless Networks

In wireless networks, multiple wireless terminals are connected to an AP, and the AP and these terminals share a spatial channel medium, using a competitive approach to communicate over wireless links (i.e., air interfaces), meaning all wireless links operate in half-duplex mode. In the access network shown in FIG.9, the wireless links between the AP and terminals are in an "or" relationship, meaning that only one wireless link may operate at a time, with multiple wireless links forming a serial model. In this case, in wireless networks, the reception of air interfaces needs to be considered by QoS first, i.e., the physical preemption of wireless links, and after packet reception, the final forwarding of packets consider may be considered after queuing.

To address the issues of air interface reception and final forwarding of packets after queuing, the network apparatus may perform packet reception and forwarding based on an Enhanced Distributed Channel Access (EDCA) parameter.

EDCA parameters are a set of channel contention parameters defined by the Wi-Fi Multimedia (WMM) protocol. The IEEE 802.11 Working Group has developed the 802.11e protocol for QoS in wireless networks, which defines the WMM protocol to ensure that high-priority packets are sent preferentially.

The WMM protocol changes fair competition modes of overall network by improving upon the 802.11 protocol. It classifies packets within the Basic Service Set (BSS) into four Access Categories (ACs), with packets in high-priority ACs having a greater opportunity to occupy the channel than those in low-priority ACs, allowing different ACs to receive different levels of service.

EDCA parameters may distinguish high-priority packets and ensure that packets with the highest priority may have higher opportunities to occupy channel resources to meet different business requirements. The WMM protocol defines a set of EDCA parameters for each AC, with the meanings of EDCA parameters as follows:

Arbitration Inter Frame Spacing Number (AIFSN): In the 802.11 protocol, the Distributed Inter-frame Spacing (DIFS), i.e., the idle waiting time, is a fixed value. However, the WMM protocol sets the number of slots that need to be waited prior to backoff for different ACs. A smaller AIFSN value means a shorter idle waiting time for users, i.e., high-priority ACs have higher channel contention opportunities.

Exponent form of Contention Window min (CWmin) (ECWmin) and Exponent form of CWmax (ECWmax): determine the average backoff time value. Larger values for these two parameters result in longer average back off times for users.

Transmission Opportunity Limit (TXOP Limit): The maximum duration that a user may occupy the channel after each successful contention. A larger value thereof allows the user to occupy the channel for a longer duration at a time. In response to a determination that the value is 0, one packet may be sent after each channel occupation.

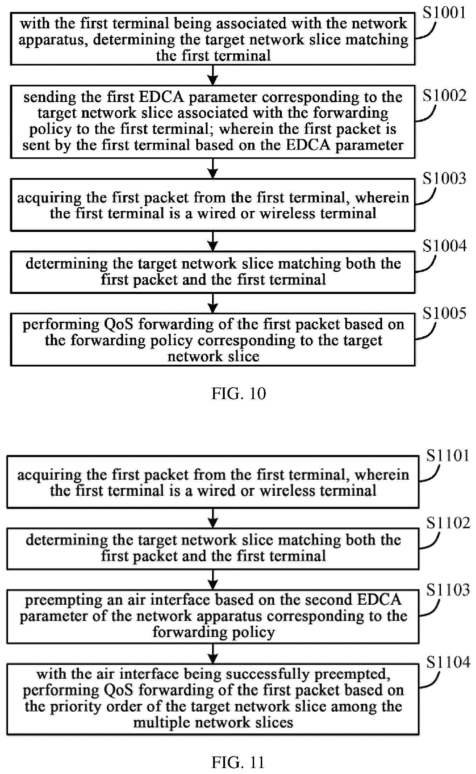

In response to a determination that the issue of air interface reception needs to be addressed, designating the network apparatus as the source apparatus along the forwarding path of the first packet and the first terminal as a wireless terminal as an example, the forwarding policy is associated with the first EDCA parameter corresponding to the network slice. In this case, the example of the present disclosure further provides a packet forwarding method, as shown in FIG.10, which may comprise the following blocks:
Block S1001: with the first terminal being associated with the network apparatus, determining the target network slice matching the first terminal.

Block S1002: sending the first EDCA parameter corresponding to the target network slice associated with the forwarding policy to the first terminal; wherein the first packet is sent by the first terminal based on the EDCA parameter.

Block S1003: acquiring the first packet from the first terminal, wherein the first terminal is a wired or wireless terminal.

Block S1004: determining the target network slice matching both the first packet and the first terminal.

Block S1005: performing QoS forwarding of the first packet based on the forwarding policy corresponding to the target network slice.

Blocks S1003 to S1005 are the same as blocks S301 to S303 described above.

In block S1001, in response to a determination that the first terminal (i.e., a wireless terminal) initiates a wireless association with the network apparatus (e.g., an AP), the forwarding policy matching is triggered, and the network apparatus matches the terminal information of the first terminal with the forwarding policy to determine the forwarding policy matching the first terminal, and then determines the corresponding target network slice.

After the first terminal is matched to the forwarding policy (i.e., the target forwarding policy), i.e., the target network slice is determined, the network apparatus executes the block S1002 by acquiring the first EDCA parameter corresponding to the target network slice from the EDCA parameters corresponding to the network slices associated with the target forwarding policy, i.e., the first EDCA parameter and sending the first EDCA parameter to the first terminal.

After associating with the network apparatus, the first terminal sends packets based on the first EDCA parameter, such as preempting the air interface based on AIFSN, ECWmin, ECWmax, and TXOP Limit, and sends the first packet to the network apparatus in response to a determination that the right to use the air interface is preempted.

Wireless terminals associated with this network apparatus may all acquire the corresponding EDCA parameters using the above blocks S 1001 to S1002. Multiple wireless terminals associated with this network apparatus then compete to forward packets through the WMM method, achieving different priorities for preemption of wireless links, thereby solving the issue of priority sending of network sliced packets for wireless terminals.

In response to a determination that the issue of final forwarding of packets after queuing needs to be addressed, designating the network apparatus as the destination apparatus along the forwarding path of the first packet and the destination terminal (e.g., the second terminal) corresponding to the first packet as a wireless terminal as an example, the forwarding policy is associated with the second EDCA parameter of the network apparatus. In this case, the example of the present disclosure further provides a packet forwarding method, as shown in FIG.11, which may comprise the following blocks:
Block S1101: acquiring the first packet from the first terminal, wherein the first terminal is a wired or wireless terminal.

Block S1102: determining the target network slice matching both the first packet and the first terminal.

Block S1103: preempting an air interface based on the second EDCA parameter of the network apparatus associated with the forwarding policy.

Block S1104: with the air interface being preempted, performing QoS forwarding of the first packet based on the priority order of the target network slice among the multiple network slices.

Blocks S1101 to S1102 are the same as blocks S301 to S302 described above.

In block S1103, the forwarding policy (e.g., target forwarding policy) corresponding to each network slice is stored in the network apparatus. After determining the target network slice, the network apparatus acquires the EDCA parameters of the network apparatus, i.e., a second EDCA parameter, from the EDCA parameters associated with the target forwarding policy. It then preempts the air interface based on second EDCA parameter such as AIFSN, ECWmin, ECWmax, and TXOP Limit. In response to a determination that the right to use the air interface is preempted, the first packet is sent to the second terminal based on the priority order of the target network slice among the multiple network slices.

For example, network slices comprise Slice 1 and Slice 2, wherein Slice 1 has a higher priority than Slice 2. In a case where an air interface is preempted, the air interface is utilized to first transmit the packet corresponding to Slice 1 to the terminal and then transmit the packet corresponding to Slice 2 to the terminal.

Furthermore, in response to a determination that network apparatus sends the first packet to the second terminal, methods such as priority mapping, traffic policing and rate limiting and traffic filtering may be employed to achieve the purpose of QoS forwarding. Detailed descriptions may be found in related technologies, and thus will not be repeated here.

In some examples of the present disclosure, forwarding parameters such as EDCA parameters associated with the forwarding policy and the priority of the network slices may be determined by the policy controller based on the expected ratio of uplink and downlink packets on the network apparatus. The ratio of uplink and downlink packets refers to the proportion of uplink packets to downlink packets. For instance, an adjustment policy is stored in the policy controller, i.e., a preset adjustment policy, wherein the preset adjustment policy indicates the correspondence relationships between the ratio of uplink and downlink packets and the parameter ratios, and a parameter ratio is the ratio between the first EDCA parameter and the second EDCA parameter. By setting the first EDCA parameter and the second EDCA parameter based on the parameter ratio in the correspondence relationship, the resource ratio occupied by uplink and downlink packets in the access network may match the ratio of uplink and downlink packets in the correspondence relationship, enabling more rational service operation.

The policy controller may acquire the expected ratio of uplink and downlink packets on the network apparatus and, based on the correspondence relationships indicated by the preset adjustment policy, determine the target parameter ratio corresponding to the expected ratio of uplink and downlink packets, and then adjust the first EDCA parameter of each network slice and/or the second EDCA parameter of the network apparatus based on the target parameter ratio. For example, the policy controller may prioritize adjusting the second EDCA parameter to achieve the target parameter ratio; in response to a determination that adjusting the second EDCA parameter fails to achieve the target parameter ratio, adjusting the first EDCA parameter of each network slice so that the ratios of all adjusted first EDCA parameters to the second EDCA parameter equal the target parameter ratio.

The policy controller sends the adjusted EDCA parameters to the network apparatus. In response to a determination that a new wireless terminal associates with the network apparatus, the network apparatus sends the first EDCA parameter of the network slice to which the wireless terminal belongs to the wireless terminal.

Herein, the expected ratio of uplink and downlink packets may be input by the user into the policy controller or determined by the policy controller based on historical ratios of uplink and downlink packets, without any limitation. The network apparatus referred to here is the one connected to the wireless terminal.

In some examples, to make packet forwarding more reasonable, the network apparatus connected to the wireless terminal may real-time acquire the current ratio of uplink and downlink packets received by the network apparatus itself. Based on the ratio of uplink and downlink packets in the access network, it adjusts the first EDCA parameter and/or the second EDCA parameter. Uplink packets refer to packets sent from the terminal to the access network side, while downlink packets refer to packets sent from the access network side to the terminal.

The network apparatus may periodically adjust the first EDCA parameter and/or the second EDCA parameter in any of the following ways:
In one mode, the network apparatus calculates and adjusts the parameters by itself.

The network apparatus determines the current ratio of uplink and downlink packets received by the network apparatus itself; determines, based on the correspondence relationships between the ratio of uplink and downlink packets and the parameter ratios indicated by the preset adjustment policy, the target parameter ratio corresponding to the current ratio. It then adjusts the first EDCA parameter and/or the second EDCA parameter based on the target parameter ratio. After the adjustment, the ratio of the first EDCA parameter to the second EDCA parameter equals the target parameter ratio.

For packets flowing through the network apparatus, the network apparatus may calculate the current ratio of uplink and downlink packets based on traffic volume or packet quantity. The preset adjustment policy indicates the parameter ratios for different ratios of uplink and downlink packets.

After calculating the current ratio of uplink and downlink packets, the network apparatus may determine the target parameter ratio corresponding to the calculated current ratio based on the preset adjustment policy and then adjust the first EDCA parameter and/or the second EDCA parameter based on the target parameter ratio.

In some examples of the present disclosure, the network apparatus may prioritize adjusting the second EDCA parameter to achieve the target parameter ratio; in response to a determination that adjusting the second EDCA parameter fails to achieve the target parameter ratio, adjusting the first EDCA parameter of each network slice so that the ratios of all adjusted first EDCA parameters to the second EDCA parameter equal the target parameter ratio.

For example, in response to a determination that the ratio of uplink and downlink packets is 5:3, the network apparatus may determine the target parameter ratio corresponding to the calculated ratio of 5:3 as 4:1 based on the preset adjustment policy. In response to a determination that the current ratio of the first EDCA parameter to the second EDCA parameter is 2:1, the network apparatus may reduce the second EDCA parameter by 50% to achieve a ratio of 4:1 between the first EDCA parameter and the second EDCA parameter.

If the second EDCA parameter cannot be reduced by 50%, the network apparatus may double the first EDCA parameter of each network slice to achieve a ratio of 4:1 between the first EDCA parameter and the second EDCA parameter.

In some examples of the present disclosure, the network apparatus may also prioritize adjusting the first EDCA parameter to achieve the target parameter ratio; in response to a determination that adjusting the first EDCA parameter fails to achieve the target parameter ratio, adjust the second EDCA parameter of each network slice so that the ratios of all adjusted second EDCA parameter to the first EDCA parameter equal the target parameter ratio.

In some examples of the present disclosure, the network apparatus may also simultaneously adjust the first EDCA parameter and the second EDCA parameter, without any limitation.

This method of adjusting EDCA parameters improves the effectiveness of EDCA parameters and enhances the efficiency of packet forwarding by the network apparatus.

In another mode, the policy controller calculates and adjusts the parameters.

The network apparatus reports the uplink packet statistics and downlink packet statistics received by the network apparatus to the policy controller. The policy controller determines the ratio of uplink and downlink packets based on the uplink packet statistics and downlink packet statistics reported by the network apparatus. Based on the correspondence relationships between the ratio of uplink and downlink packets and the parameter ratios indicated by the preset adjustment policy, it determines the target parameter ratio corresponding to the current ratio. It then adjusts the first EDCA parameter of each network slice and/or the second EDCA parameter of the network apparatus based on the target parameter ratio and sends the first EDCA parameter and the second EDCA parameter to the network apparatus. The network apparatus receives and stores the first EDCA parameter and the second EDCA parameter sent by the policy controller.

Herein, the uplink packet statistics refer to the traffic volume or packet quantity of uplink packets received by the network apparatus which is statistically counted by the network apparatus, while the downlink packet statistics refer to the traffic volume or packet quantity of downlink packets received by the network apparatus which is statistically counted by the network apparatus. The determination methods of uplink packet statistics and downlink packet statistics may refer to the relevant descriptions in one mode above, and thus will not be repeated here. This method of adjusting EDCA parameters reduces the burden on the network apparatus and enhances the efficiency of packet forwarding by the network apparatus.

In some examples of the present disclosure, after acquiring the adjusted first EDCA parameter and second EDCA parameter, the network apparatus may immediately apply the second EDCA parameter, i.e., preempt the air interface and forward packets based on the second EDCA parameter.

For the first EDCA parameter, the network apparatus may determine the network slice to which a new wireless terminal belongs in response to a determination that the new wireless terminal accesses the network apparatus and send the first EDCA parameter of that network slice to the wireless terminal. At this point, the first EDCA parameter of that network slice takes effect in the wireless terminal, and the wireless terminal preempts the air interface and sends packets based on the first EDCA parameter.

For the first EDCA parameter, after receiving the first EDCA parameter, the network apparatus may reconnect the wireless terminals in the individual network slices. The network apparatus may send the first EDCA parameter of each network slice to the wireless terminals in each network slice which have been reconnected by the network apparatus. At this point, the first EDCA parameter of each network slice takes effect in the wireless terminals.

In some examples of the present disclosure, the network apparatus may also adopt other methods to apply the first EDCA parameter and the second EDCA parameter.

In some examples of the present disclosure, the preset adjustment policy may also indicate the correspondence relationships between the ratios of uplink and downlink packets and the priorities of the individual network slices. The network apparatus and the policy controller may adjust the priorities of the individual network slices based on the preset adjustment policy. Some adjustment methods may refer to the adjustment methods of EDCA parameters described above.

In some examples of the present disclosure, by adjusting the EDCA parameters and the priorities of the network slices, packet forwarding becomes more rational.

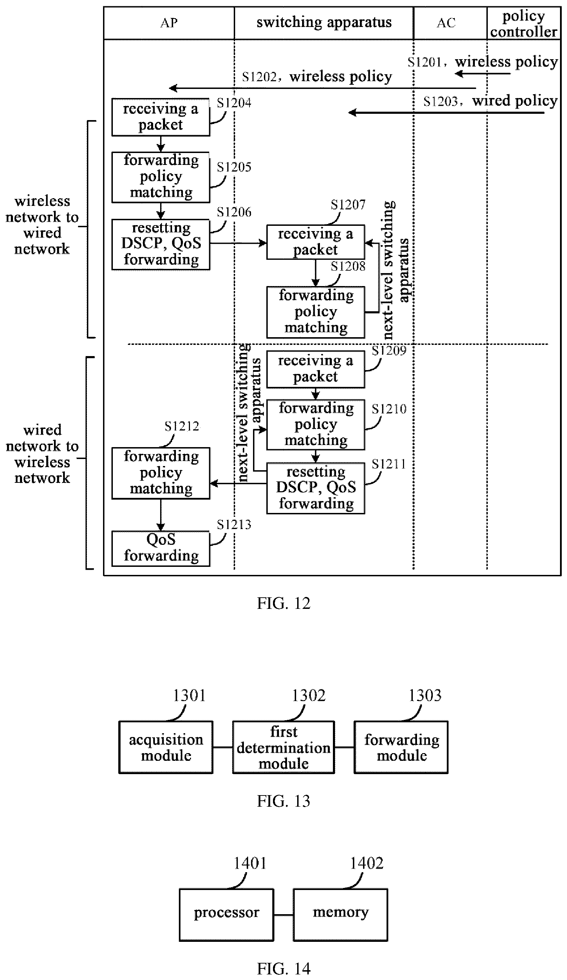

Below is a detailed explanation of the packet forwarding method provided in some examples of the present disclosure, combined with the packet forwarding process shown in FIG.12. In FIG.12, the switching apparatus may comprise one or more levels of aggregation-switching apparatuses and one or more levels of access-switching apparatuses, which are simplified to a single switching apparatus in FIG.12. The controller may comprise an Access Controller (AC) and a Policy Controller. The forwarding policy corresponding to the wireless network is referred to as the wireless policy, and the forwarding policy corresponding to the wired network is referred to as the wired policy.

Prior to packet forwarding:
Block S1201: issuing, by the Policy Controller, the wireless policy to the AC.
Block S1202: issuing, by the AC, the wireless policy to the Access Point (AP).

In some examples of the present disclosure, after receiving the wireless policy, the AC may store the wireless policy, so that in response to a determination that a new AP comes online, the AC may issue the wireless policy to the new AP.

Block S1203: issuing, by the Policy Controller, the wired policy to each switching apparatus.

The execution order of the blocks S1201 to S1203 is not limited in some examples of the present disclosure.

Packet forwarding process from the wireless network to the wired network is as follows:
Block S1204: receiving, by the AP, a packet sent by a wireless terminal.

The wireless terminal may preempt the air interface based on the EDCA parameter associated with the corresponding network slice issued by the AP and then send the packet to the AP.

Block S1205: performing, by the AP, forwarding policy (wireless policy) matching, i.e., determining the network slice matching the packet and the wireless terminal, as well as the forwarding policy corresponding to that network slice.

Block S1206: resetting, by the AP, the characteristic value of the DSCP field in the packet and performing QoS forwarding of the packet.

In some examples of the present disclosure, the DSCP field is taken as an example for the specified field of the packet for illustration, which is not limited.

After determining the forwarding policy, the AP may acquire the DSCP of the corresponding network slice, update the DSCP to the DSCP field of the packet at the egress interface, and use methods such as priority mapping, traffic policing and rate limiting, and traffic filtering to forward the packet to the switching apparatus. Among them, priority mapping, traffic policing and rate limiting, and traffic filtering may all be acquired through the forwarding policy.

Block S1207: performing, by the switching apparatus, forwarding policy (wired policy) matching, i.e., determining the network slice matching the packet and the wireless terminal, as well as the forwarding policy corresponding to that network slice.

Block S1208: resetting, by the switching apparatus, the characteristic value of the DSCP field in the packet and performing QoS forwarding of the packet.

After determining the forwarding policy, the switching apparatus acquires the DSCP of the corresponding network slice, updates the DSCP to the DSCP field of the packet at the egress interface, and uses methods such as priority mapping, traffic policing and rate limiting, and traffic filtering to forward the packet to the next-level switching apparatus. The next-level switching apparatus re-executes blocks S1207 to S1208. The process is repeated until the packet is forwarded out of the local access network.

Packet forwarding process from the wired network to the wireless network is as follows:
Block S1209: receiving, by the switching apparatus, a packet sent by a wired terminal;
Block S1210: performing, by the switching apparatus, forwarding policy (wired policy) matching, i.e., determining the network slice matching the packet and the wired terminal, as well as the forwarding policy corresponding to that network slice;
Block S1211: resetting, by the switching apparatus, the characteristic value of the DSCP field in the packet and performing QoS forwarding of the packet.

In some examples of the present disclosure, the DSCP field is taken as an example for the specified field of the packet for illustration, which is not limited.

After determining the forwarding policy, the switching apparatus acquires the DSCP of the corresponding network slice, updates the DSCP to the DSCP field of the packet at the egress interface, and uses methods such as priority mapping, traffic policing and rate limiting, and traffic filtering to forward the packet to the next-level switching apparatus. The next-level switching apparatus re-executes blocks S1210 to S1211. The process is repeated until the packet is forwarded out of the wired network and sent to the AP.

Block S1212: performing, by the AP, forwarding policy (wireless policy) matching, i.e., determining the network slice matching the packet and the wireless terminal, as well as the forwarding policy corresponding to that network slice.

Block S1213: performing, by the AP, QoS forwarding of the packet based on the forwarding policy.

After determining the forwarding policy, the AP may preempt the air interface based on the EDCA parameters of the AP, and send the packet to the wireless terminal by means of the order of priority, traffic policing and rate limiting, and traffic filtering of each network slice.

The above part of FIG.12 is illustrated with a local forwarding scenario as an example. The technical solution provided in some examples of the present disclosure may also be applied to a centralized forwarding scenario, where the AC processes packets based on the wireless policy.

In the centralized forwarding scenario, the packet forwarding process from the wireless network to the wired network is as follows: after the AP executes blocks S1204 and S1205, in response to a determination that the block S1206 need to be executed, the AP encapsulates the packet into a CAPWAP (Control And Provisioning of Wireless Access Points Protocol Specification) tunnel packet, resets the characteristic value of the DSCP field of the outer layer of the CAPWAP tunnel packet, and performs QoS forwarding of the CAPWAP tunnel packet. Each switching apparatus in the switching network repeatedly executes blocks S1207 to S1208 until the CAPWAP tunnel packet is forwarded to the AC. The AC disassembles the CAPWAP tunnel packet to acquire the original packet, and executes the forwarding policy (wireless policy) matching based on the above blocks S1205 to S1206, resets the characteristic value of the DSCP field in the packet, and performs QoS forwarding of the packet. Subsequently, each switching apparatus in the switching network repeatedly executes blocks S1207 to S1208 until the packet is forwarded out of the local access network.

In the centralized forwarding scenario, the packet forwarding process from the wired network to the wireless network is as follows: each switching apparatus in the switching network repeatedly executes blocks S1210 to S1211 until the packet is forwarded out of the wired network and sent to the AC. The AC executes the forwarding policy (wireless policy) matching based on the block S1212, encapsulates the packet into a CAPWAP tunnel packet, resets the characteristic value of the DSCP field of the outer layer of the CAPWAP tunnel packet, and performs QoS forwarding of the CAPWAP tunnel packet. Each switching apparatus in the switching network repeatedly executes blocks S1210 to S1211 until the CAPWAP tunnel packet is forwarded to the AP. The AP disassembles the CAPWAP tunnel packet to acquire the original packet, and then executes blocks S1212 and S1213.

In the technical solution provided in some examples of the present disclosure, the network apparatus performs network slicing based on multiple perspectives such as terminals and services; the wired network and wireless network are integrated, and the entire access network uses a unified forwarding policy to process packets. The wireless network and wired network are considered as a whole, and the corresponding forwarding policies for the wireless network and wired network are consistent. The effective scope of network slicing comprises: the air interface + wired access part, i.e., the entire access network from the aggregation-switching apparatus to the AP and wireless terminal. In addition, QoS processing is performed on the wireless air interface side, and the forwarding policy is adjusted for the transmission of the physical layer of the air interface, such as preempting the air interface based on EDCA parameters. This improves the traffic control effect.

Furthermore, the packet forwarding method provided in some examples of the present disclosure does not use packet headers (such as SRv6 identifiers) to carry network slice identifiers. Therefore, the application scenarios are no longer limited to some networking scenarios such as IPv6 networks, and the packet forwarding method provided in some examples of the present disclosure can be applied to any networking form such as IPv4 networks and IPv6 networks.

Corresponding to the above packet forwarding method, some examples of the present disclosure also provide a packet forwarding equipment, as shown in FIG.13, which is applied to network apparatuses in an access network. The equipment comprises:
an acquisition module 1301, to acquire a first packet from a first terminal, wherein the first terminal is a wired terminal or a wireless terminal;
a first determination module 1302, to determine a target network slice matching both the first packet and the first terminal;
a forwarding module 1303, to perform QoS forwarding of the first packet based on the forwarding policy corresponding to the target network slice.

In some examples, the network apparatus is a source apparatus, an intermediate apparatus, or a destination apparatus along the forwarding path of the first packet;
the first determination module 1302 is to determine a network slice corresponding to the packet information of the first packet and the terminal information of the first terminal based on the pre-stored correspondence relationships among packet information, terminal information, and network slices, and designating the network slice as a target network slice matching both the first packet and the first terminal.

In some examples, the network apparatus is a source apparatus, an intermediate apparatus, or a destination apparatus along the forwarding path of the first packet;
the first determination module 1302 is to acquire a first characteristic value filled in a specified field of the first packet; determine a network slice associated with the first characteristic value based on the correspondence relationships between characteristic values and the network slices associated with the forwarding policy, to acquire the target network slice matching both the first packet and the first terminal.

In some examples, the network apparatus is a source apparatus or an intermediate apparatus along the forwarding path of the first packet;
the forwarding module 1303 is to:
acquire a second characteristic value associated with the target network slice based on the correspondence relationships between the characteristic values and the network slices associated with the forwarding policy;
modify the characteristic value filled in the specified field of the first packet to the second characteristic value to acquire a second packet;
perform QoS forwarding of the second packet based on the forwarding policy corresponding to the target network slice.

In some examples, the network apparatus is an intermediate apparatus along the forwarding path of the first packet; the forwarding module 1303 is to:
detect sameness between the second characteristic value and the characteristic value filled in the specified field of the first packet;
in response to a determination that the second characteristic value is not the same as the characteristic value filled in the specified field of the first packet, modify the characteristic value filled in the specified field of the first packet to the second characteristic value to acquire a second packet; perform QoS forwarding of the second packet based on the forwarding policy corresponding to the target network slice;
in response to a determination that the second characteristic value is the same as the characteristic value filled in the specified field of the first packet, take the first packet as the second packet and perform QoS forwarding of the second packet based on the forwarding policy corresponding to the target network slice.

In some examples, the characteristic values comprise a VLAN ID and/or a DSCP.

In some examples, the network apparatus is a source apparatus along the forwarding path of the first packet, and the first terminal is a wireless terminal. The packet forwarding equipment may further comprise:
a second determination module, to determine the target network slice matching the first terminal in response to a determination that the first terminal is associated with the network apparatus prior to acquiring the first packet from the first terminal;
a sending module, to send first EDCA parameter corresponding to the target network slice associated with the forwarding policy to the first terminal; wherein the first packet is a packet sent by the first terminal based on the first EDCA parameter.

In some examples, the network apparatus is a destination apparatus along the forwarding path of the first packet, and the destination terminal corresponding to the first packet is a wireless terminal;
the forwarding module is to preempt an air interface based on the second EDCA parameter of the network apparatus associated with the forwarding policy; in the case of preempting the air interface, perform QoS forwarding of the first packet based on the priority order of the target network slice among the multiple network slices.

In some examples, the packet forwarding equipment may further comprise:
an adjustment module, to adjust the first EDCA parameter of each network slice and/or the second EDCA parameter of the network apparatus based on the current ratio of uplink packets and downlink packets received by the network apparatus.

In some examples, the adjustment module is to:
determine the current ratio of uplink packets and downlink packets received by the network apparatus; determine, based on the correspondence relationships between the ratios of uplink packets and downlink packets and the parameter ratios indicated by the preset adjustment policy, the target parameter ratio corresponding to the current ratio, wherein the parameter ratio is the ratio of the first EDCA parameter to the second EDCA parameter; adjust the first EDCA parameter of each network slice and/or the second EDCA parameter of the network apparatus based on the target parameter ratio; or,
report the uplink packet statistics and downlink packet statistics received by the network apparatus to a policy controller; receive and store the first EDCA parameter of each network slice and/or the second EDCA parameter of the network apparatus issued by the policy controller.

In some examples, the packet forwarding equipment may further comprise:
a receiving module, to receive the forwarding policy issued by the policy controller;
a storage module, to store the received forwarding policy in the network apparatus.

In the technical solution provided in some examples of the present disclosure, the network apparatus in the access network determines the target network slice, i.e., network differentiated services, based on the first packet and the first terminal sending the first packet. Based on the forwarding policy corresponding to the target network slice, the network apparatus performs QoS forwarding of the first packet to achieve traffic control. In this packet forwarding method, both wired and wireless network apparatuses may identify packets and terminals. Therefore, the forwarding policy corresponding to the network slice provided in the technical solution of some examples of the present disclosure may be applied to wired and wireless networks, so that the same packet and the same terminal in different network apparatuses belong to the same network slice, and then the forwarding policy corresponding to the same network slice is adopted to perform QoS forwarding of the packet, which solves the problem of independent forwarding policies in wired and wireless networks. At the same time, it reduces the management difficulty of the forwarding policies and improves the traffic control effect.

Corresponding to the above packet forwarding method, an example of the present disclosure further provides a network apparatus, as shown in FIG.14, which comprises a processor 1401 and a memory 1402; wherein,
the memory 1402 is to store a computer program;
the processor 1401 is to, in response to executing the program stored in the memory 1402, perform any one of the above packet forwarding methods.

The memory may be a Random Access Memory (RAM), or a Non-Volatile Memory (NVM), such as one or more disk memory. In some examples, the memory may also be one or more storage device located far away from the aforementioned processor.

The above processor may be a general-purpose processor, comprising a Central Processing Unit (CPU), a Network Processor (NP), etc.; it may also be a Digital Signal Processor (DSP), a Disclosure Specific Integrated Circuit (ASIC), a Field-Programmable Gate Array (FPGA) or other programmable logic devices, discrete gates or transistor logic devices, discrete hardware components.

In yet another example provided by the present disclosure, a computer-readable storage medium is further provided with a computer program stored therein which, in response to being executed by a processor, performs any one of the packet forwarding methods in the above examples.

In yet another example provided by the present disclosure, a computer program product containing instructions is further provided, which, in response to running on a computer, causes the computer to execute any one of the packet forwarding methods in the above examples.

In the above examples, all or part of them may be implemented through software, hardware, firmware, or any combination of them. In response to a determination that implemented in software, it may be implemented in the form of a computer program product in whole or in part. The computer program product comprises one or more computer instructions. In response to a determination that the computer program instructions are loaded and executed on the computer, all or part of the processes or functions described in some examples of the present disclosure are generated. The computer may be a general-purpose computer, a dedicated computer, a computer network, or other programmable devices. The computer instructions may be stored in a computer-readable storage medium, or transmitted from one computer-readable storage medium to another computer-readable storage medium, for example, the computer instructions may be transmitted from one website, computer, server, or data center to another website, computer, server, or data center via wired (e.g., coaxial cable, fiber optic, Digital Subscriber Line (DSL)) or wireless (e.g., infrared, wireless, microwave, etc.) means. The computer-readable storage medium may be any available medium accessible by a computer or an integrated server, data center, or other data storage device containing one or more available media. The available media may be magnetic media (e.g., floppy disk, hard disk, magnetic tape), optical media (e.g., DVD), or semiconductor media (e.g., Solid State Disk (SSD)), etc.

It should be noted that in this document, relational terms such as first and second are used to distinguish one entity or operation from another entity or operation, and do not necessarily require or imply any actual relationship or order between these entities or operations. Moreover, the terms "comprise", "contain" or any other variants are intended to cover non-exclusive inclusion, so that a process, method, article, or device that comprises a series of elements not only comprises those elements, but also comprises other elements not explicitly listed, or also comprises elements inherent to such a process, method, article, or device. Without further limitation, elements limited by the statement "comprising a ..." do not exclude the existence of additional identical elements in the process, method, article, or device that comprises the elements.

The example in this specification is described in a related manner, and the same or similar parts between the examples may refer to each other. Each example focuses on describing the differences from other examples. In particular, for an equipment, a network apparatus, storage medium, and program product examples, since being similar to the method examples, the description is relatively simple, and the relevant parts may refer to the description of the method examples.

The above description is examples of the present disclosure and is not used to limit the protection scope of the present disclosure. Any modifications, equivalent substitutions, improvements, etc. made within the spirit and principles of the present disclosure should be comprised in the protection scope of the present disclosure.

## Claims

1. A packet forwarding method, applied to a network apparatus in an access network, wherein the method comprises:
acquiring a first packet from a first terminal, wherein the first terminal is a wired terminal or a wireless terminal;
determining a target network slice matching both the first packet and the first terminal;
performing Quality of Service, QoS, forwarding of the first packet based on a forwarding policy corresponding to the target network slice.

2. The method of claim 1, wherein the network apparatus is a source apparatus, an intermediate apparatus, or a destination apparatus along a forwarding path of the first packet;
determining the target network slice matching both the first packet and the first terminal comprises:
determining a network slice corresponding to packet information of the first packet and terminal information of the first terminal based on pre-stored correspondence relationships among packet information, terminal information, and network slices, and designating the network slice as the target network slice matching both the first packet and the first terminal.

3. The method of claim 1, wherein the network apparatus is a source apparatus, an intermediate apparatus, or a destination apparatus along a forwarding path of the first packet;
determining the target network slice matching both the first packet and the first terminal comprises:
acquiring a first characteristic value filled in a specified field of the first packet;
determining a network slice associated with the first characteristic value based on correspondence relationships between characteristic values and network slices associated with a forwarding policy, to acquire the target network slice matching both the first packet and the first terminal.

4. The method of claim 3, wherein the network apparatus is a source apparatus or an intermediate apparatus along the forwarding path of the first packet;
performing QoS forwarding of the first packet based on the forwarding policy corresponding to the target network slice, comprises:
acquiring a second characteristic value associated with the target network slice based on the correspondence relationships between the characteristic values and the network slices associated with the forwarding policy;
modifying a characteristic value filled in the specified field of the first packet to the second characteristic value to acquire a second packet;
performing QoS forwarding of the second packet based on the forwarding policy corresponding to the target network slice.

5. The method of claim 4, wherein the network apparatus is an intermediate apparatus along the forwarding path of the first packet; the method further comprises:
detecting sameness between the second characteristic value and a characteristic value filled in the specified field of the first packet;
in response to a determination that the second characteristic value is not the same as the characteristic value filled in the specified field of the first packet, modifying the characteristic value filled in the specified field of the first packet to the second characteristic value to acquire the second packet;
in response to a determination that the second characteristic value is the same as the characteristic value filled in the specified field of the first packet, designating the first packet as the second packet, and performing QoS forwarding of the second packet based on the forwarding policy corresponding to the target network slice.

6. The method of claim 4 or 5, wherein the characteristic value comprises Virtual Local Area Network Identifiers, VLAN IDs, and/or Differentiated Services Code Points, DSCPs.

7. The method of claim 1, wherein the network apparatus is a source apparatus along a forwarding path of the first packet, and the first terminal is a wireless terminal; prior to acquiring the first packet from the first terminal, the method further comprises:
determining a target network slice matching the first terminal with the first terminal being associated with the network apparatus;
sending a first Enhanced Distributed Channel Access, EDCA, parameter corresponding to the target network slice associated with the forwarding policy to the first terminal; wherein the first packet is a packet sent by the first terminal based on the first EDCA parameter.

8. The method of claim 1, wherein the network apparatus is a destination apparatus along a forwarding path of the first packet, and a destination terminal corresponding to the first packet is a wireless terminal;
performing QoS forwarding of the first packet based on the forwarding policy corresponding to the target network slice comprises:
preempting an air interface based on a second EDCA parameter of the network apparatus associated with the forwarding policy;
once the air interface is preempted, performing QoS forwarding of the first packet based on a priority order of the target network slice among multiple network slices.

9. The method of claim 7 or 8, further comprising:
adjusting a first EDCA parameter of each network slice and/or a second EDCA parameter of the network apparatus based on a current ratio of uplink packets and downlink packets received by the network apparatus.

10. The method of claim 9, wherein adjusting the first EDCA parameter of each network slice and/or the second EDCA parameter of the network apparatus based on the current ratio of uplink packets and downlink packets received by the network apparatus comprises:
determining the current ratio of uplink packets and downlink packets received by the network apparatus; determining a target parameter ratio corresponding to the current ratio based on correspondence relationships between ratios of uplink packets and downlink packets and parameter ratios indicated by a preset adjustment policy, wherein a parameter ratio is a ratio of the first EDCA parameter to the second EDCA parameter; adjusting the first EDCA parameter of each network slice and/or the second EDCA parameter of the network apparatus based on the target parameter ratio; or,
reporting uplink packet statistics and downlink packet statistics received by the network apparatus to a policy controller; receiving and storing the first EDCA parameter of each network slice and/or the second EDCA parameter of the network apparatus issued by the policy controller.

11. The method of claim 1, further comprising:
receiving the forwarding policy issued by a policy controller;
storing the forwarding policy in the network apparatus.

12. A packet forwarding equipment, applied to a network apparatus in an access network, wherein the equipment comprises:
an acquisition module, to acquire a first packet from a first terminal, wherein the first terminal is a wired terminal or a wireless terminal;
a first determination module, to determine a target network slice matching both the first packet and the first terminal;
a forwarding module, to perform QoS forwarding of the first packet based on a forwarding policy corresponding to the target network slice.

13. The equipment of claim 12, wherein the network apparatus is a source apparatus, an intermediate apparatus, or a destination apparatus along a forwarding path of the first packet;
the first determination module is to determine a network slice corresponding to packet information of the first packet and terminal information of the first terminal based on pre-stored correspondence relationships among packet information, terminal information, and network slices, and designating the network slice as the target network slice matching both the first packet and the first terminal.

14. The equipment of claim 12, wherein the network apparatus is a source apparatus, or an intermediate apparatus, or a destination apparatus along a forwarding path of the first packet;
the first determination module is to acquire a first characteristic value filled in a specified field of the first packet; determine a network slice associated with the first characteristic value based on correspondence relationships between characteristic values and network slices associated with a forwarding policy, to acquire the target network slice matching both the first packet and the first terminal.

15. The equipment of claim 14, wherein the network apparatus is a source apparatus or an intermediate apparatus along the forwarding path of the first packet;
the forwarding module is to:
acquire a second characteristic value associated with the target network slice based on the correspondence relationships between the characteristic values and the network slices associated with the forwarding policy;
modify a characteristic value filled in the specified field of the first packet to the second characteristic value to acquire a second packet;
perform QoS forwarding of the second packet based on the forwarding policy corresponding to the target network slice.

16. The equipment of claim 15, wherein the network apparatus is an intermediate apparatus along the forwarding path of the first packet; the forwarding module is to:
detect sameness between the second characteristic value and a characteristic value filled in the specified field of the first packet;
in response to a determination that the second characteristic value is not the same as the characteristic value filled in the specified field of the first packet, modify the characteristic value filled in the specified field of the first packet to the second characteristic value to acquire the second packet, and performing QoS forwarding of the second packet based on the forwarding policy corresponding to the target network slice;
in response to a determination that the second characteristic value is the same as the characteristic value filled in the specified field of the first packet, designate the first packet as the second packet, and perform QoS forwarding of the second packet based on the forwarding policy corresponding to the target network slice.

17. The equipment of claim 15 or 16, wherein the characteristic value comprises Virtual Local Area Network Identifiers, VLAN IDs, and/or Differentiated Services Code Points, DSCPs.

18. The equipment of claim 12, wherein the network apparatus is a source apparatus along a forwarding path of the first packet, and the first terminal is a wireless terminal; the equipment further comprises:
a second determination module, to determine a target network slice matching the first terminal with the first terminal being associated with the network apparatus prior to acquiring the first packet from the first terminal;
a sending module, to send a first EDCA parameter corresponding to the target network slice associated with the forwarding policy to the first terminal; wherein the first packet is a packet sent by the first terminal based on the first EDCA parameter.

19. The equipment of claim 12, wherein the network apparatus is a destination apparatus along a forwarding path of the first packet, and a destination terminal corresponding to the first packet is a wireless terminal;
the forwarding module is to preempt an air interface based on a second EDCA parameter of the network apparatus associated with the forwarding policy; and perform QoS forwarding of the first packet based on a priority order of the target network slice among multiple network slices in a case where the air interface is preempted.

20. The equipment of claim 18 or 19, wherein the equipment further comprises:
an adjustment module, to adjust a first EDCA parameter of each network slice and/or a second EDCA parameter of the network apparatus based on a current ratio of uplink packets and downlink packets received by itself.

21. The equipment of claim 20, wherein the adjustment module is to:
determine the current ratio of uplink packets and downlink packets received by itself; determine, a target parameter ratio corresponding to the current ratio based on correspondence relationships between ratios of uplink packets and downlink packets and parameter ratios indicated by a preset adjustment policy, wherein a parameter ratio is a ratio of the first EDCA parameter to the second EDCA parameter; adjust the first EDCA parameter of each network slice and/or the second EDCA parameter of the network apparatus based on the target parameter ratio; or,
report uplink packet statistics and downlink packet statistics received by the network apparatus to a policy controller; and receive and store the first EDCA parameter of each network slice and/or the second EDCA parameter of the network apparatus issued by the policy controller.

22. The equipment of claim 12, wherein the equipment further comprises:
a receiving module, to receiving the forwarding policy issued by a policy controller;
a storage module, to storing the forwarding policy in the network apparatus.

23. A network apparatus, wherein the network apparatus comprises a processor and a memory;
the memory is to store a computer program; and
the processor is to execute the computer program stored on the memory to perform the methods according to any one of claims 1 to 11.

24. A machine-readable storage medium, wherein the machine-readable storage medium stores a computer program which, in response to being executed by a processor, performs the methods according to any one of claims 1 to 11.
